# EUROPEAN PATENT SPECIFICATION

(11) **EP 4 353 431 B1**
(45) Date of publication and mention of the grant of the patent: **31.12.2025**
(21) Application number: 22826579.9
(22) Date of filing: 02.11.2022
(51) Int. Cl.: B26D 1/06, B26D 5/08, B26D 7/06, B26D 7/00

(54) **CUTTING MECHANISM AND FEEDING DEVICE**
SCHNEIDMECHANISMUS UND ZUFÜHRVORRICHTUNG
MÉCANISME DE COUPE ET DISPOSITIF D'ALIMENTATION

(30) Priority: 31.08.2022 CN 202222309302 U
(43) Date of publication of application: 17.04.2024
(73) Proprietor: Wuxi Lead Intelligent Equipment Co., Ltd., Wuxi, Jiangsu 214028 (CN)
(72) Inventor: SONG, Yaoguang, Wuxi, Jiangsu 214028 (CN); YANG, Xiaofei, Wuxi, Jiangsu 214028 (CN)
(74) Representative: Kurig, Thomas
(86) International application number: PCT/CN2022/129209
(87) International publication number: WO 2024/045316

(56) References cited:
- CN-U- 211 966 085
- CN-U- 211 966 092
- CN-U- 214 108 979
- US-A1- 2007 199 422
- US-A1- 2019 143 548

## Description

### Technical Field

The Patent relates to the technical field of battery manufacturing equipment, in particular to a cutting mechanism and a feeding device.

### Background

In the process of battery manufacturing, a cutting mechanism is used to cut a pole piece. The cutting mechanism comprises a cutter holder, a stationary cutter and a moving cutter assembly, the stationary cutter is fixedly arranged on the cutter holder, the moving cutter assembly comprises a guide rod and a guide rod frame, the guide rod is slidably connected with the cutter holder, and the moving cutter and the guide rod frame are respectively connected with two ends of the guide rod. The cutting mechanism also comprises a driving assembly which is connected with the guide rod frame. During working, the driving assembly drives the guide rod frame to drive the guide rod to move, so that the moving cutter moves towards the stationary cutter, and the moving cutter and the stationary cutter cooperate to cut the pole piece.

Generally, the driving assembly is connected to one end of the guide rod frame, so that a force application point for the driving assembly to act on the guide rod frame is at one end of the guide rod frame, which leads to greater stress and more serious wear of the guide rod near the force application point, and thus different places of the guide rod have different wear degrees. As a result, inclining guide is caused, which leads to a gap between the moving cutter and the stationary cutter, so the cutting effect is poor, for example, burrs tend to be generated from cutting.

CN211966085U discloses a cutting mechanism, which comprises a fixed cutter assembly, a movable cutter assembly and a cutting assembly, the movable cutter assembly is connected with the fixed bracket in a sliding manner; the movable cutter assembly comprises a movable cutter base and a movable cutter arranged on the movable cutter base. The flying cutting driving structure is used for controlling the movable cutter assembly to be matched with the fixed cutter assembly so as to cut the to-be-cut part at a preset position; the active driving structure is used for controlling the movable cutter assembly to be matched with the fixed cutter assembly so as to cut the to-be-cut part at any position; and the reset structure is used for resetting the movable cutter assembly completing the cutting operation.

### Summary

In view of the problem of poor cutting effect of a traditional cutting mechanism, it is necessary to provide a feeding device.

A feeding device according to the invention is defined in claim 1 and comprises a mounting base, acutting mechanism mounted on the mounting base, and a guide mechanism
the cutting mechanism comprises:
a cutter holder;
a stationary cutter fixedly arranged on the cutter holder;
a moving cutter assembly comprising a mounting piece and a moving cutter, the mounting piece being slidably arranged on the cutter holder in a first direction, the moving cutter being mounted on the mounting piece, and the mounting piece having a centerline parallel to the first direction; and
a driving assembly comprising a first end and a second end, the first end being matched with the guide mechanism, and the second end being connected to a part of the mounting piece corresponding to the centerline;
wherein when the cutter holder drives parts located on the cutter holder to move in a second direction, the guide mechanism can drive the driving assembly to apply a driving force to the mounting piece in the first direction, so that the mounting piece drives the moving cutter to move close to the stationary cutter so as to cut a workpiece at a preset position, and the first direction intersects the second direction.
the feeding device (100) is used for feeding and cutting a pole piece.

The feeding device further comprises a clamping mechanism for clamping the workpiece, the clamping mechanism is slidably connected with the mounting base in the second direction, and the clamping mechanism and the cutting mechanism are sequentially arranged in the second direction; and
in the second direction, the clamping mechanism and the cutting mechanism are able to synchronously slide relative to the mounting base.

In one embodiment, the clamping mechanism comprises a clamping base, a fixed clamping roller and a movable clamping roller, the clamping base is slidably connected with the mounting base in the second direction, the fixed clamping roller is fixedly arranged on the clamping base, and the movable clamping roller is movably connected with the clamping base to cooperate with the fixed clamping roller to clamp the workpiece.

In one embodiment, the feeding device further comprises a first actuator, the cutter holder is connected with a first driving end of the first actuator, and the first actuator is able to drive the cutter holder to move in the second direction together with parts located on the cutter holder.

In one embodiment, a side of the guide mechanism facing the driving assembly, is provided with a guide groove, and the guide groove is provided with a first straight groove section, an arc groove section and a second straight groove section which communicate with each other in sequence; and the first straight groove section and the second straight groove section both extend in the second direction, the arc groove section bends in the first direction to one side of the stationary cutter, and a first end of the driving assembly is slidably arranged in the guide groove.

In one embodiment, the feeding device further comprises a second actuator, the guide mechanism is connected with a second driving end of the second actuator, and the second actuator is able to drive the guide mechanism to move away from or close to the driving assembly to adjust the distance between the guide mechanism and the driving assembly.

In one embodiment, the mounting piece comprises a guide member and a connecting member, and the guide member is slidably arranged on the cutter holder in the first direction; and
in the first direction, the moving cutter and the connecting member are respectively connected to two ends of the guide member, and the driving assembly is connected with a part of the connecting member corresponding to the centerline.

In one embodiment, the guide member comprises at least two groups of guide rods, each group of the guide rods comprises at least one guide rod, and an extension direction of each said guide rod is parallel to the first direction; and
the two groups of guide rods are symmetrically arranged on two sides of the centerline, and two ends of each said guide rod are respectively connected with the moving cutter and the connecting member.

In one embodiment, guide sleeves are arranged in the cutter holder, and each said guide rod is sleeved within the corresponding guide sleeve, and/or
the cutting mechanism further comprises first elastic pieces, and the first elastic pieces are arranged between the guide sleeves and the connecting member.

In one embodiment, the mounting piece further comprises a mounting plate, the mounting plate is connected with the guide member, and the moving cutter is mounted on the mounting plate.

In one embodiment, the cutting mechanism further comprises a pressing piece, and the pressing piece is movably arranged on the mounting plate in the first direction to press the workpiece on the stationary cutter before the moving cutter and the stationary cutter cooperate to cut the workpiece.

In one embodiment, the driving assembly comprises a driving plate, a mating piece and a connecting block, the mating piece is connected with the driving plate and matched with the guide mechanism, and the connecting block is connected with the driving plate and the mounting piece.

In one embodiment, the connecting block comprises a first connecting part and a second connecting part, the first connecting part is connected with one of the mounting piece and the driving plate, and the second connecting part is connected with the other of the mounting piece and the driving plate; and
the first connecting part is provided with a mating hole therein, the second connecting part extends in a direction parallel to the second direction, and the second connecting part penetrates through the mating hole.

In one embodiment, the mating hole is a waist-shaped hole, the waist-shaped hole extends longitudinally in a direction parallel to a third direction, a moving gap exists between the second connecting part and the mating hole in the third direction, and the first direction, the second direction and the third direction intersect each other.

In one embodiment, the second connecting part comprises a body and a sleeve sleeving the body, and both the body and the sleeve penetrate through the mating hole.

In one embodiment, the driving plate is of an L-shaped structure, the mating piece is connected with a short side of the L-shaped structure, and the connecting block is connected with an outer of a long side of the L-shaped structure.

In one embodiment, one of the driving assembly and the cutter holder is provided with first sliding rails parallel to the first direction, the other is provided with first sliders, and the first sliders are slidably connected with the first sliding rails, and/or
the cutting mechanism further comprises a second elastic piece, and the second elastic piece is sandwiched between the cutter holder and the stationary cutter.

According to the cutting mechanism and the feeding device, because the driving assembly is connected with the part of the mounting piece corresponding to the centerline, a force application point for the driving assembly to act on the mounting piece is located on the centerline of the mounting piece, so that the parts of the mounting piece on two sides of the centerline are subjected to equal stress; and compared with the prior art where a force application point of the driving assembly is close to one end of the mounting piece, the problem that an end, avoid wear more seriously at the end of the connection between the mounting piece and the cutter holder, which is close to a force application point, thus causing a cutting gap between the moving cutter and the stationary cutter is solved, and the cutting effect is good.

### Brief Description of the Drawings

Fig. 1 is a front view of a feeding device provided by an embodiment of the invention;
Fig. 2 is a front view of a partial structure of a cutting mechanism of the feeding device shown in Fig. 1;
Fig. 3 is a top view of the structure shown in Fig. 2;
Fig. 4 is a right side view of a cutting mechanism and a guide mechanism of the feeding device shown in Fig. 1;
Fig. 5 is a left side view of the feeding device shown in Fig. 1;
Fig. 6 is a partial structural diagram of the structure shown in Fig. 2;
Fig. 7 is a front view of the cutting mechanism and the guide mechanism shown in Fig. 4;
Fig. 8 is a front view of a clamping mechanism of the feeding device shown in Fig. 1;
Fig. 9 is a top view of the clamping mechanism shown in Fig. 8.

### Description of reference numerals:

100, feeding device; 10, mounting base; 20, cutting mechanism; 21, cutter holder; 22, stationary cutter; 23, moving cutter assembly; 231, mounting piece; 2311, guide member; 23111, guide rod; 2312, connecting member; 2313, mounting plate; 232, moving cutter; 24, second elastic piece; 25, guide sleeve; 26, first elastic piece; 27, pressing piece; 28, driving assembly; 281, mating piece; 282, driving plate; 2821, short side; 2822, long side; 283, connecting block; 2831, first connecting part; 2832, second connecting part; 2833, body; 2834, sleeve; L, centerline; 30, second sliding rail; 40, first actuator; 50, guide mechanism; 51, guide groove; 511, first straight groove section; 512, arc groove section; 513, second straight groove section; 60, first sliding rail; 70, first slider; 80, clamping mechanism; 81, clamping base; 82, fixed clamping roller; 83, movable clamping roller; 84, third actuator; 90, fourth actuator; 200,workpiece.

### Detailed Description of Embodiments

In order to make the above objects, features and advantages of this invention more obvious and understandable, the following detailed description of this invention will be made with reference to the accompanying drawings. In the following description, numerous specific details are set forth in order to provide a thorough understanding of the invention. However, this invention can be implemented in many other ways different from those described here, and those skilled in the art can make similar improvements. Therefore, the protection is not limited by the specific embodiments disclosed below but only limited by the claims.

In the description it should be understood that directional or positional relationships indicated by the terms such as "center", "longitudinal", "transverse", "length", "width", "thickness", "upper", "lower", "front", "rear", "left", "right", "vertical", "horizontal", "top", "bottom", "inner", "outer", "clockwise", "counter clockwise", "axial", "radial" and "circumferential" are based on the directional or positional relationships shown in the drawings, which are only for the convenience and simplifying the description, but do not indicate or imply that the referred devices or elements must have a specific orientation or be constructed and operated in a specific orientation, so they cannot be understood as limiting the scope of protection.

In addition, the terms "first" and "second" are only used for descriptive purposes, and cannot be understood as indicating or implying relative importance or implicitly indicating the number of indicated technical features. Therefore, the features defined with "first" and "second" may include one or more of the features explicitly or implicitly.

Unless otherwise specified and defined, the terms "install", "connect" and "fix" should be understood in a broad sense. For example, it can be fixed connection, detachable connection or integrated connection; it can be mechanical connection or electric connection; and it can be direct connection, indirect connection through intermediate media or internal communication or interaction of two elements, unless otherwise explicitly defined. Those of ordinary skill in the art can understand the specific meaning of the above terms in specific situations.

Unless otherwise specified and limited, the expression that a first feature is "above" or "below" a second feature may mean that the first feature and the second feature are in direct contact, or the first feature and the second feature are in indirect contact through an intermediary. Further, the expression that the first feature is "above" the second feature may be that the first feature is directly above or obliquely above the second feature, or it only means that a level of the first feature is higher than that of the second feature; and the expression that the first feature is "below" the second feature may be that the first feature is directly below or obliquely below the second feature, or it only means that the level of the first feature is lower than that of the second feature.

It should be noted that when an element is described as being "fixed to" or "arranged on" another element, it may be directly on another element or there may be an intermediate element. When an element is considered to be "connected" to another element, it may be directly connected to another element or there may be an intermediate element. The terms "vertical", "horizontal", "upper", "lower", "left", "right" and similar expressions used herein are for the purpose of illustration only, and are not meant to be the only implementation.

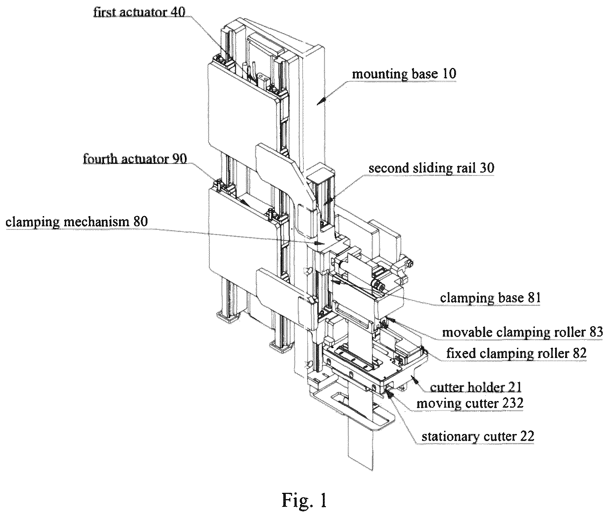

Referring to Fig. 1, an embodiment of the invention provides a feeding device 100, which is used for feeding and cutting a workpiece 200. Specifically, the workpiece 200 is a pole piece for manufacturing a battery. It should be understood that, in other embodiments, the type of the workpiece 200 is not limited.

The invention will be described in detail below by assuming that the feeding device 100 is used for feeding and cutting a pole piece, but this description will not limit the protection scope of protection.

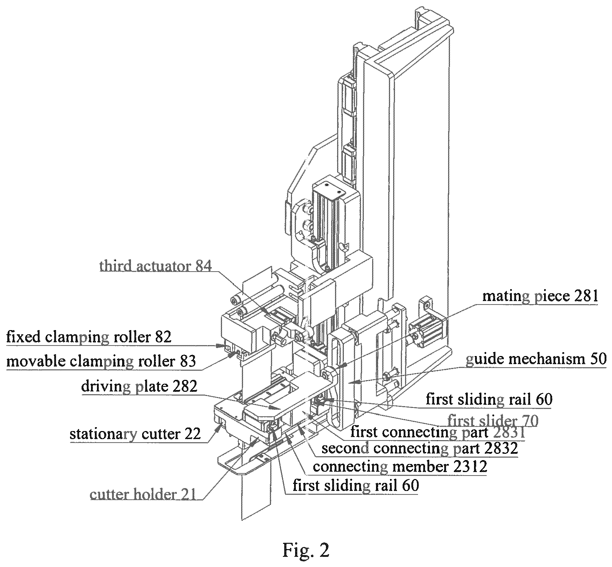

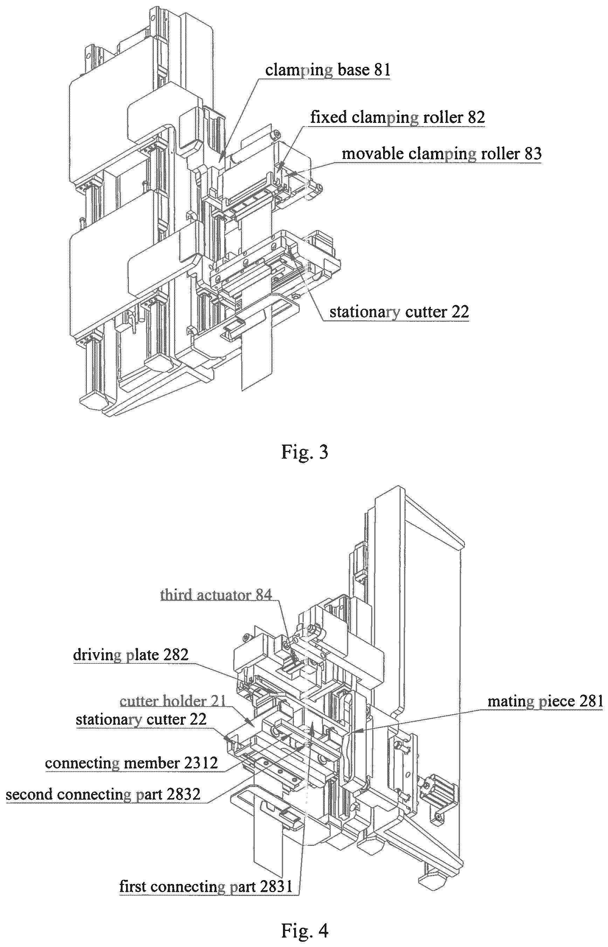

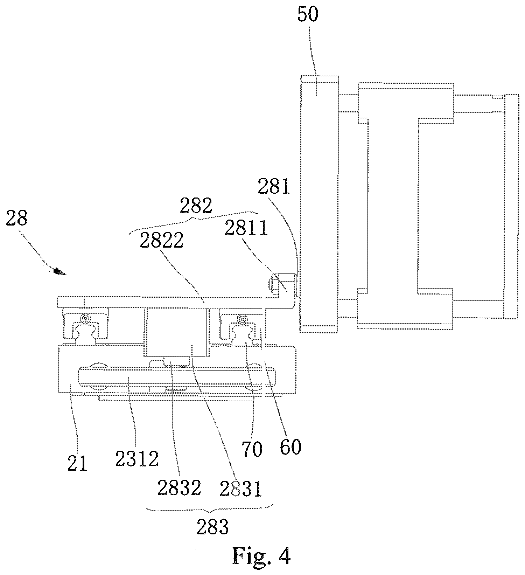

The feeding device 100 comprises a mounting base 10 and a cutting mechanism 20, and the cutting mechanism 20 is mounted on the mounting base 10. Specifically, referring to Figs. 1 and 2, the cutting mechanism 20 comprises a cutter holder 21, a stationary cutter 22, a moving cutter assembly 23 and a driving assembly 28. The cutter holder 21 is installed on the mounting base 10, and the stationary cutter 22 is fixedly arranged on the cutter holder 21. Referring to Fig. 3, the moving cutter assembly 23 comprises a mounting piece 231 and a moving cutter 232. The mounting piece 231 is slidably arranged on the cutter holder 21 in a first direction, and the moving cutter 232 is mounted on the mounting piece 231. Referring to Figs. 1 and 4, the feeding device 100 further comprises a guide mechanism 50, the driving assembly 28 comprises a first end and a second end, the first end is matched with the guide mechanism 50, and the second end is connected with the mounting piece 231.

Further, the cutter holder 21 is slidably connected with the mounting base 10 in a second direction, and the first direction intersects the second direction. Specifically, the mounting base 10 is provided with a second sliding rail 30 extending in the second direction, and the cutter holder 21 is provided with a second slider which is slidably connected with the second sliding rail 30. The cutter holder 21 is matched with the second sliding rail 30 through the second slider to be slidably connected with the mounting base 10 in the second direction, so that the cutter holder 21 moves more smoothly. When the cutter holder 21 drives parts located thereon to move in the second direction relative to the mounting base 10, the guide mechanism 50 can drive the driving assembly 28 to apply a driving force to the mounting piece 231 in the first direction, so that the mounting piece 231 drives the moving cutter 232 to move close to the stationary cutter 22 to cut a workpiece 200 at a preset position.

When the feeding device 100 is in operation, the pole piece enters between the stationary cutter 22 and the moving cutter 232. The cutter holder 21 is controlled to drive parts located thereon to move in the second direction relative to the mounting base 10, and the movement speed is equal to the conveying speed of the pole piece. During the movement of the cutter holder 21 in the second direction relative to the mounting base 10, the guide mechanism 50 can drive the driving assembly 28 to apply a driving force to the mounting piece 231 in the first direction, and the mounting piece 231 drives the moving cutter 232 to move close to the stationary cutter 22, and finally the moving cutter 232 cooperates with the stationary cutter 22 at a preset position to cut off the pole piece. In this way, when the cutter holder 21 drives the parts located thereon to move relative to the mounting base 10 in the second direction, the driving assembly 28 can apply a driving force to the mounting piece 231, and the mounting piece 231 drives the moving cutter 232 to move close to the stationary cutter 22 to cooperate with the stationary cutter 22 to cut off the pole piece at the preset position, thus realizing the effect of fly-cutting which can cut the pole piece rapidly, shortening cutting time and improving production efficiency.

It should be noted that cutting the pole piece at the preset position means that the driving assembly 28 will not apply a driving force on the mounting piece 231 at any position when the cutter holder 21 moves in the second direction relative to the mounting base 10, instead, the driving assembly 28 applies a driving force on the mounting piece 231 in the first direction only when the cutter holder 21 moves to a certain position relative to the mounting base 10. Only when the driving assembly 28 applies a driving force to the mounting piece 231 in the first direction, the moving cutter 232 moves toward the stationary cutter 22 and finally cooperates with the stationary cutter 22 to cut the pole piece at the preset position.

The second direction is parallel to the conveying direction of the pole piece (that is, the length direction of the pole piece). Specifically, the second direction is perpendicular to the first direction. The first direction is perpendicular to a plane where the pole piece is located, that is, the first direction is the thickness direction of the pole piece.

Further, both the stationary cutter 22 and the moving cutter 232 extend in a direction parallel to the third direction, and the first direction, the second direction and the third direction are perpendicular to each other. In this case, the third direction is the width direction of the pole piece. The extension length of the stationary cutter 22 and the moving cutter 232 in the third direction is larger than the width of the pole piece, so as to cut off the pole piece.

Referring to Fig. 1, the first direction is the direction X in Fig. 1, and the second direction is the direction Z in Fig. 1. Referring to Fig. 3, the third direction is the direction Y in Fig. 3, which is also the direction perpendicular to the principal plane shown in Fig. 1.

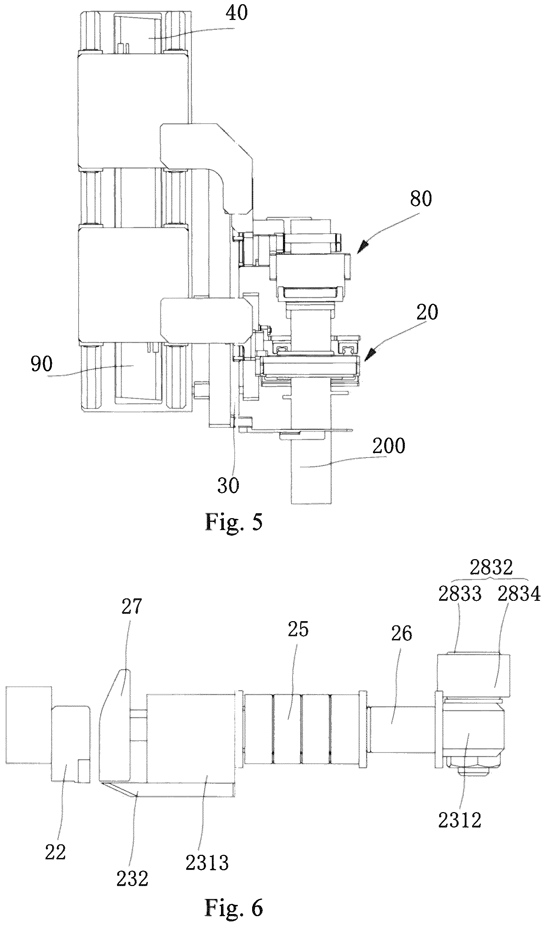

Referring to Fig. 5, the feeding device 100 further comprises a first actuator 40, and the cutter holder 21 is connected with a first driving end of the first actuator 40, and the first actuator 40 is able to drive the cutter holder 21 to move in the second direction together with parts thereon. Specifically, the first actuator 40 is a motor, and the motor is connected with the cutter holder 21 through a screw module. Of course, in other embodiments, the type of the first actuator 40 is not limited, for example, the first actuator 40 may be a cylinder.

In an embodiment, referring to Fig. 2, the cutting mechanism 20 is further provided with a second elastic piece 24, and the second elastic piece 24 is sandwiched between the cutter holder 21 and the stationary cutter 22. The second elastic piece 24 is provided to adjust a gap between the stationary cutter 22 and the moving cutter 232.

In one embodiment, referring to Fig. 3, the mounting piece 231 has a centerline L parallel to the first direction, and a second end of the driving assembly 28 is connected to a part of the mounting piece 231 corresponding to the centerline L,. Because the driving assembly 28 is connected with the part of the mounting piece 231 corresponding to the centerline L, , a force application point for the driving assembly 28 to act on the mounting piece 231 is located on the centerline L of the mounting piece 231, so that the parts of the mounting piece 231 on two sides of the centerline L, are subjected to equal stress; and compared with the prior art where a force application point of the driving assembly 28 is close to one end of the mounting piece 231, the problem that an end, avoid wear more seriously at the end of connection between the mounting piece 231 and the cutter holder 21, which close to a force application point, thus causing a cutting gap between the moving cutter 232 and the stationary cutter 22 is solved, and the cutting effect is good.

It should be noted that the centerline L is located on the plane where the mounting piece 231 is located. The second end of the driving assembly 28 being connected to the part of the mounting piece 231 corresponding to the centerline L means that the driving assembly 28 can be connected to a position of the mounting piece 231 corresponding to the centerline L in the extending direction of the centerline L, so as to ensure that the force application point allowing the driving assembly 28 to act on the mounting piece 231 is located on the centerline L of the mounting piece 231, which further ensures that the parts, on two sides of the centerline L, of the mounting piece 231 are subjected to equal stress.

Referring to Fig. 3, the mounting piece 231 comprises a guide member 2311 and a connecting member 2312, and the guide member 2311 is slidably disposed on the cutter holder 21 in the first direction. In the first direction, the moving cutter 232 and the connecting member 2312 are respectively connected to two ends of the guide member 2311, and the second end of the driving assembly 28 is connected to the connecting member 2312. The second end of the driving assembly 28 is connected to a part of the connecting member 2312 corresponding to the centerline L. Referring to Fig. 3, the second end of the driving assembly 28 is connected to a middle part of the connecting member 2312 in the third direction. When the driving assembly 28 drives the connecting member 2312 to move, the guide member 2311 drives the moving cutter 232 to move in the first direction.

Since the second end of the driving assembly 28 is connected to the middle part of the connecting member 2312 in the third direction, a force application point allowing the driving assembly 28 to act on the connecting member 2312 is at the middle part of the connecting member 2312. In this way, left and right sides of the guide member 2311 in the third direction are subjected to equal stress, so that the problem that one side of the guide member 2311 is worn more seriously, thus causing a cutting gap between the moving cutter 232 and the stationary cutter 22 is solved, and the cutting effect is good.

The guide member 2311 comprises at least two groups of guide rods, each group of guide rods comprises at least one guide rod 23111, and the extension direction of each guide rod 23111 is parallel to the first direction. The two groups of guide rods are symmetrically arranged on two sides of the centerline L, and two ends of each guide rod 23111 are respectively connected with the moving cutter 232 and the connecting member 2312. By providing the guide member 2311 with two groups of guide rods, the guide member 2311 can slide more smoothly relative to the cutter holder 21.

In a specific embodiment, each group of guide rods comprises a guide rod 23111, and the second end of the driving assembly 28 is connected to the middle part of the connecting member 2312 in the third direction. In this way, the two guide rods 23111 are subjected to equal stress, thus avoiding the situation that one guide rod 23111 is worn more seriously.

Specifically, referring to Fig. 6, guide sleeves 25 are arranged in the cutter holder 21, and each guide rod 23111 is sleeved with the corresponding guide sleeve 25, so as to reduce the friction between the guide rod 23111 and the cutter holder 21 and reduce wear. The cutting mechanism 20 further comprises a first elastic piece 26 which is arranged between the guide sleeve 25 and the connecting member 2312 to provide a buffer for the moving cutter assembly 23.

Preferably, the connecting member 2312 is of a rod-shaped structure to further reduce the weight of the mounting piece 231 and facilitate the sliding of the mounting piece 231 relative to the cutter holder 21.

It can be understood that in other embodiments, the specific arrangement of the mounting piece 231 is not limited, as long as the mounting piece 231 can be connected with the driving assembly 28 and can drive the moving cutter 232 mounted thereon to move relative to the cutter holder 21 under the driving of the driving assembly 28.

In an embodiment, referring to Fig. 6, the mounting piece 231 further comprises a mounting plate 2313 which is connected with the guide rod 23111, and the moving cutter 232 is mounted on the mounting plate 2313. In this way, the installation of the moving cutter 232 is facilitated.

Further, the cutting mechanism 20 comprises a pressing piece 27 which is movably arranged on the mounting plate 2313 in the first direction, so as to press the pole piece on the stationary cutter 22 before the moving cutter 232 and the stationary cutter 22 cooperate to cut the pole piece, thus facilitating the cutting of the pole piece.

Referring to Fig. 4, the driving assembly 28 comprises a driving plate 282, a mating piece 281 and a connecting block 283. The mating piece 281 is connected to the driving plate 282 and is matched with the guide mechanism 50, and the connecting block 283 is connected to the driving plate 282 and the mounting piece 231. In this way, the structure of the driving assembly 28 is simplified. Specifically, the mating piece 281 is a roller disposed at an end of the driving plate 282, and the roller is disposed in a guide groove 51 (described below) of the guide mechanism 50.

In a specific embodiment, the driving plate 282 is of an L-shaped structure, the roller is connected to a short side 2821 of the L-shaped structure, and the connecting block 283 is connected to the outside of a long side 2822 of the L-shaped structure. In this way, the driving plate 282 will not hinder the roller from cooperating with the guide groove 51, and connection with the connecting member 2312 is facilitated. Of course, in other embodiments, the specific shape of the driving plate 282 is not limited.

Further, one of the driving plate 282 and the cutter holder 21 is provided with first sliding rails 60 parallel to the first direction, and the other is provided with first sliders 70 which are slidably connected with the first sliding rails 60. The driving plate 282 and the cutter holder 21 are slidably connected in the first direction through the cooperation of the first sliders 70 and the first sliding rails 60. Specifically, there are two first sliding rails 60, and the two first sliding rails 60 are distributed on two sides of the connecting block 283 in the third direction. Correspondingly, there are two groups of first sliders 70 matched with the first sliding rails 60. Therefore, the operation stability of the whole structure can be improved.

In one embodiment, still referring to Fig. 4, the connecting block 283 comprises a first connecting part 2831 and a second connecting part 2832. The first connecting part 2831 is connected to one of the mounting piece 231 and the driving plate 282, and the second connecting part 2832 is connected to the other of the mounting plate 2313 and the driving plate 282. The first connecting part 2831 is provided with a mating hole, the second connecting part 2832 extends in a direction parallel to the second direction, and the second connecting part 2832 penetrates through the mating hole.

Specifically, the second connecting part 2832 is connected to the mounting piece 231, and the first connecting part 2831 is connected to the driving plate 282. It should be understood that in other embodiments, the second connecting part 2832 can also be connected with the driving plate 282, and in this case, the first connecting part 2831 is connected with the mounting piece 231.

In this way, through the cooperation of the second connecting part 2832 and the mating hole, connection between the driving assembly 28 and the mounting piece 231 is facilitated, and at the same time, the installation error of the driving assembly 28 and the mounting piece 231 in the second direction (the axial direction of the second connecting part 2832) can be eliminated.

The mating hole of the first connecting part 2831 is a waist-shaped hole, and the waist-shaped hole extends longitudinally in a direction parallel to the third direction (the extending direction of the stationary cutter 22 and the moving cutter 232), so that a moving gap exists between the second connecting part 2832 and the mating hole in the third direction, which helps to eliminate the installation error of the driving assembly 28 and the mounting piece 231 in the third direction.

In a specific embodiment, still referring to Fig. 6, the second connecting part 2832 comprises a body 2833 and a sleeve 2834 sleeving the body 2833, and both the body 2833 and the sleeve 2834 penetrate through the mating hole. In this way, when the driving assembly 28 and the mounting piece 231 move relatively, friction is small and wear is reduced.

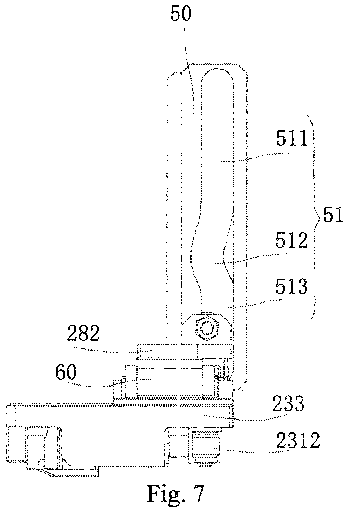

In one embodiment, referring to Fig. 7, a side of the guide mechanism 50 facing the driving assembly 28 is provided with a guide groove 51, and the guide groove 51 is provided with a first straight groove section 511, an arc groove section 512 and a second straight groove section 513 which communicate with each other in sequence; and the first straight groove section 511 and the second straight groove section 513 both extend in the second direction, and the arc groove section 512 bends in the first direction to one side of the stationary cutter 22. In this way, when the cutter holder 21 drives parts mounted thereon to move in the second direction relative to the mounting base 10, the roller moves along the track of the guide groove 51 in the guide groove 51, and when the roller moves to the arc groove section 512, under the action of the arc groove section 512, the driving assembly 28 drives the mounting piece 231 to move in the first direction, so that the mounting piece 231 drives the moving cutter 232 to move close to the stationary cutter 22 and cooperate with the stationary cutter 22 to cut the workpiece at a preset position, thus realizing fly-cutting.

Of course, in other embodiments, the specific arrangement of the guide mechanism 50 is not limited, as long as it can guide the driving assembly 28 in the second direction and make the driving assembly 28 apply a driving force to the mounting piece 231, so that the mounting piece 231 drives the moving cutter 232 to move in the first direction.

The feeding device 100 further comprises a second actuator, and the guide mechanism 50 is connected with a second driving end of the second actuator. By driving the guide mechanism 50 to move away from or close to the roller, the second actuator adjusts the distance between the guide mechanism 50 and the roller, so as to control the distance between the guiding groove 51 of the guide mechanism 50 and the roller, that is, control the restriction of the guide mechanism 50 on the driving assembly 28. Specifically, when the roller is completely separated from the guide groove 51 of the guide mechanism 50, the restriction of the guide mechanism 50 on the driving assembly 28 is released, that is, the restriction of the guide mechanism 50 on the moving cutter assembly 23 is released. When the roller is matched with the guide groove 51 of the guide mechanism 50, the guide mechanism 50 restricts the moving track of the moving cutter assembly 23.

According to the invention and still referring to Fig. 1, the feeding device 100 further comprises a clamping mechanism 80 which is slidably connected with the mounting base 10 in the second direction, and the clamping mechanism 80 and the cutting mechanism 20 are sequentially arranged in the second direction. In the second direction, the clamping mechanism 80 and the cutting mechanism 20 are able to synchronously slide relative to the mounting base 10. Specifically, the moving speed of the clamping mechanism 80 is equal to the conveying speed of the pole piece, so that the clamping mechanism 80 can clamp the pole piece before the cutting mechanism 20 cuts the pole piece. In this way, when the cutter holder 21 drives parts thereon to move in the second direction, the clamping mechanism 80 can move synchronously, and before the moving cutter 232 and the stationary cutter 22 cut the pole piece at the preset position, the clamping mechanism 80 can clamp the pole piece to prevent the displacement of the pole piece when being cut by the cutting mechanism 20, so as to improve cutting accuracy.

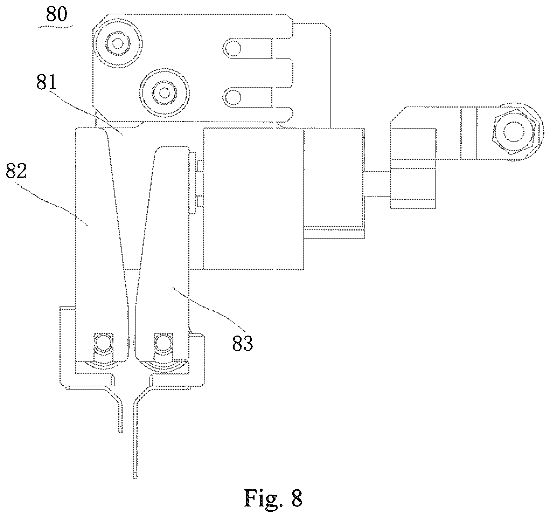

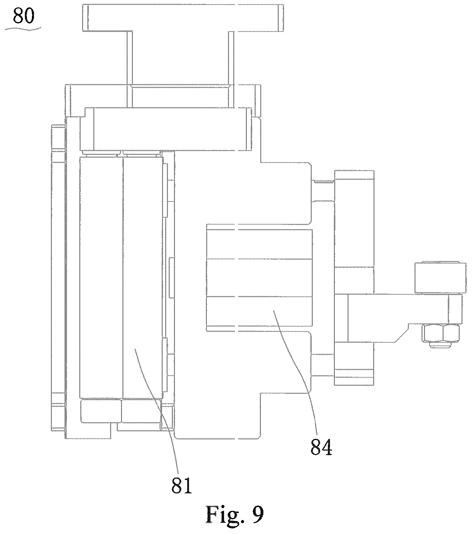

Referring to Figs. 8 and 9, the clamping mechanism 80 comprises a clamping base 81, a fixed clamping roller 82 and a movable clamping roller 83. The clamping base 81 is slidably connected with the mounting base 10 in the second direction, the fixed clamping roller 82 is fixedly arranged on the clamping base 81, and the movable clamping roller 83 is movably connected with the clamping base 81 to clamp the pole piece in cooperation with the fixed clamping roller 82. The clamping mechanism 80 further comprises a third actuator 84 arranged on the clamping base 81, the movable clamping roller 83 is connected with a third driving end of the third actuator 84, and the third actuator 84 is controlled to drive the movable clamping roller 83 to move close to or away from the fixed clamping roller 82. Specifically, the third actuator 84 is a driving cylinder. In other embodiments, the third actuator 84 is not particularly limited, as long as it can drive the movable clamping roller 83 to move.

In other embodiments, the specific structure of the clamping mechanism 80 is not limited as long as it can clamp the pole piece.

Further, the mounting base 10 is provided with third sliding rails, and the clamping base 81 is provided with third sliders which are slidably connected with the third sliding rails. The clamping base 81 is slidably connected with the mounting base 10 in the second direction through the cooperation of the third sliders and the third sliding rails. Further, the first sliding rail 60 and the third sliding rail are the same sliding rail, so that the structure is more compact and the volume of the feeding device 100 is reduced.

In an embodiment, still referring to Fig. 5, the feeding device 100 further comprises a fourth actuator 90, the clamping base 81 is connected with a fourth driving end of the fourth actuator 90, and the fourth actuator 90 is controlled to drive the clamping base 81 to drive parts thereon to move in the second direction. Specifically, the fourth actuator 90 is a motor. Of course, in other embodiments, the type of the fourth actuator 90 is not limited, for example, the fourth actuator 90 may be a cylinder.

The technical features of the above embodiments can be combined freely. In order to make the description concise, all possible combinations of the technical features in the above embodiments are not described. However, as long as there is no contradiction in the combinations of these technical features, they should be considered as falling in the scope recorded in this specification. specification, provided that such combinations fall under the scope of the claims.

The above embodiments are only several implementation ways and their descriptions are specific and detailed, but they cannot be understood as limiting the scope of protection. Several modifications and improvements can be made within the scope of the appended claims.

## Claims

1. A feeding device (100), comprising:
a mounting base (10);
a cutting mechanism (20)mounted on the mounting base (10); and
a guide mechanism (50);
wherein, the cutting mechanism (20) comprises:
a cutter holder (21);
a stationary cutter (22) fixedly arranged on the cutter holder (21);
a moving cutter assembly (23) comprising a mounting piece (231) and a moving cutter (232), the mounting piece (231) being slidably arranged on the cutter holder (21) in a first direction, the moving cutter (232) being mounted on the mounting piece (231), and the mounting piece (231) having a centerline (L) parallel to the first direction; and
a driving assembly (28) comprising a first end and a second end, the first end being matched with the guide mechanism (50), and the second end being connected to a part of the mounting piece (231) corresponding to the centerline (L);
wherein when the cutter holder (21) drives parts located on the cutter holder (21) to move in a second direction, the guide mechanism (50) can drive the driving assembly (28) to apply a driving force to the mounting piece (231) in the first direction, so that the mounting piece (231) drives the moving cutter (232) to move close to the stationary cutter (22) so as to cut a workpiece (200) at a preset position, and the first direction intersects the second direction;
the feeding device (100) is used for feeding and cutting a pole piece; the feeding device (100) being **characterized in that** the feeding device (100) further comprises a clamping mechanism (80) for clamping the workpiece (200), the clamping mechanism (80) is slidably connected with the mounting base (10) in the second direction, and the clamping mechanism (80) and the cutting mechanism (20) are sequentially arranged in the second direction; and
in the second direction, the clamping mechanism (80) and the cutting mechanism (20) are able to synchronously slide relative to the mounting base (10),
wherein preferably, the clamping mechanism (80) comprises a clamping base (81), a fixed clamping roller (82) and a movable clamping roller (83), the clamping base (81) is slidably connected with the mounting base (10) in the second direction, the fixed clamping roller (82) is fixedly arranged on the clamping base (81), and the movable clamping roller (83) is movably connected with the clamping base (81) to cooperate with the fixed clamping roller (82) so as to clamp the workpiece (200).

2. The feeding device (100) according to claim 1, wherein the feeding device (100) further comprises a first actuator (40), the cutter holder (21) is connected with a first driving end of the first actuator (40), and the first actuator (40) is able to drive the cutter holder (21) to move in the second direction together with parts located on the cutter holder (21).

3. The feeding device (100) according to claim 1, wherein a side of the guide mechanism (50) facing the driving assembly (28) is provided with a guide groove (51), and the guide groove (51) is provided with a first straight groove section(511), an arc groove section (512) and a second straight groove section (513) communicating with each other in sequence; and
the first straight groove section (511) and the second straight groove section (513) both extend in the second direction, the rc groove section (512) bends in the first direction to one side of the stationary cutter (22), and a first end of the driving assembly (28) is slidably arranged in the guide groove (51),
wherein the feeding device (100) further comprises a second actuator, the guide mechanism (50) is connected with a second driving end of the second actuator, and the second actuator is able to drive the guide mechanism (50) to move away from or close to the driving assembly (28) to adjust a distance between the guide mechanism (50) and the driving assembly (28).

4. The feeding device (100) according to claim 1, wherein the mounting piece (231) comprises a guide member (2311) and a connecting member (2312), and the guide member (2311) is slidably arranged on the cutter holder (21) in the first direction; and
in the first direction, the moving cutter (232) and the connecting member (2312) are respectively connected to two ends of the guide member (2311), and the driving assembly (28) is connected with a part of the connecting member (2312) corresponding to the centerline (L).

5. The feeding device (100) according to claim 4, wherein the guide member (2311) comprises at least two groups of guide rods (23111), each group of the guide rods (23111) comprises at least one guide rod (23111), and an extension direction of each said guide rod (23111) is parallel to the first direction; and
the two groups of guide rods (23111) are symmetrically arranged on two sides of the centerline (L), and two ends of each said guide rod (23111) are respectively connected with the moving cutter (232) and the connecting member (2312).

6. The feeding device (100) according to claim 5, wherein guide sleeves (25) are arranged in the cutter holder (21), and each said guide rod (23111) is sleeved within the corresponding guide sleeve (25), and/or
the cutting mechanism (20) further comprises first elastic pieces (26), and the first elastic pieces (26) are arranged between the guide sleeves (25) and the connecting member (2312).

7. The feeding device (100) according to claim 4, wherein the mounting piece (231) further comprises a mounting plate (2313), the mounting plate (2313) is connected with the guide member (2311), and the moving cutter (232) is mounted on the mounting plate (2313).

8. The feeding device (100) according to claim 7, wherein the cutting mechanism (20) further comprises a pressing piece (27), and the pressing piece (27) is movably arranged on the mounting plate (2313) in the first direction to press the workpiece (200) on the stationary cutter (22) before the moving cutter (232) and the stationary cutter (22) cooperate to cut the workpiece (200).

9. The feeding device (100) according to claim 1, wherein the driving assembly (28) comprises a driving plate (282), a mating piece (281) and a connecting block (283), the mating piece (281) is connected with the driving plate (282) and matched with the guide mechanism (50), and the connecting block (283) is connected with the driving plate (282) and the mounting piece (231).

10. The feeding device (100) according to claim 9, wherein the connecting block (283) comprises a first connecting part (2831) and a second connecting part (2832), the first connecting part (2831) is connected with one of the mounting piece (231) and the driving plate (282), and the second connecting part (2832) is connected with the other of the mounting piece (231) and the driving plate (282); and
the first connecting part (2831) is provided with a mating hole therein, the second connecting part (2832) extends in a direction parallel to the second direction, and the second connecting part (2832) penetrates through the mating hole.

11. The feeding device (100) according to claim 10, wherein the mating hole is a waist-shaped hole, the waist-shaped hole extends longitudinally in a direction parallel to a third direction, a moving gap exists between the second connecting part (2832) and the mating hole in the third direction, and the first direction, the second direction and the third direction intersect each other,
preferably, the second connecting part (2832) comprises a body (2833) and a sleeve (2834) sleeving the body (2833), and both the body (2833) and the sleeve (2834) penetrate through the mating hole.

12. The feeding device (100) according to claim 9, wherein the driving plate (282) is of an L-shaped structure, the mating piece (281) is connected with a short side of the L-shaped structure, and the connecting block (283) is connected with an outer of a long side of the L-shaped structure.

13. The feeding device (100) according to claim 1, wherein one of the driving assembly (28) and the cutter holder (21) is provided with first sliding rails (60) parallel to the first direction, the other is provided with first sliders (70), and the first sliders (70) are slidably connected with the first sliding rails (60), and/or
the cutting mechanism (20) further comprises a second elastic piece (24), and the second elastic piece (24) is sandwiched between the cutter holder (21) and the stationary cutter (22).

## Patentansprüche

1. Eine Zuführvorrichtung (100), umfassend:
eine Montagebasis (10);
einen Schneidmechanismus (20), der auf der Montagebasis (10) montiert ist; und
einen Führungsmechanismus (50);
wobei der Schneidmechanismus (20) Folgendes umfasst:
einen Schneidwerkzeughalter (21);
ein stationäres Schneidwerkzeug (22), das fest am Schneidwerkzeughalter (21) angeordnet ist;
eine bewegliche Schneidanordnung (23), die ein Montagestück (231) und ein bewegliches Schneidwerkzeug (232) umfasst, wobei das Montagestück (231) in einer ersten Richtung verschiebbar auf dem Schneidwerkzeughalter (21) angeordnet ist, das bewegliche Schneidwerkzeug (232) auf dem Montagestück (231) montiert ist und das Montagestück (231) eine Mittellinie (L) parallel zur ersten Richtung aufweist; und
eine Antriebsbaugruppe (28), die ein erstes und ein zweites Ende umfasst, wobei das erste Ende mit dem Führungsmechanismus (50) übereinstimmt und das zweite Ende mit einem Teil des Montagestücks (231) verbunden ist, der der Mittellinie (L) entspricht;
wobei, wenn der Schneidwerkzeughalter (21) Teile, die sich auf dem Schneidwerkzeughalter (21) befinden, antreibt, sich in eine zweite Richtung zu bewegen, der Führungsmechanismus (50) die Antriebsbaugruppe (28) antreiben kann, um eine Antriebskraft auf das Montagestück (231) in der ersten Richtung auszuüben, sodass das Montagestück (231) das bewegliche Schneidwerkzeug (232) antreibt, sich nahe an das stationäre Schneidwerkzeug (22) zu bewegen, um ein Werkstück (200) an einer voreingestellten Position zu schneiden, und die erste Richtung die zweite Richtung schneidet;
die Zuführvorrichtung (100) zum Zuführen und Schneiden eines Polstücks verwendet wird; die Zuführvorrichtung (100) **dadurch gekennzeichnet ist, dass** die Zuführvorrichtung (100) ferner einen Klemmmechanismus (80) zum Festklemmen des Werkstücks (200) umfasst, der Klemmmechanismus (80) in der zweiten Richtung verschiebbar mit der Montagebasis (10) verbunden ist und der Klemmmechanismus (80) und der Schneidmechanismus (20) in der zweiten Richtung nacheinander angeordnet sind; und
in der zweiten Richtung der Klemmmechanismus (80) und der Schneidmechanismus (20) synchron relativ zur Montagebasis (10) gleiten können, wobei der Klemmmechanismus (80) vorzugsweise eine Klemmbasis (81), eine feste Klemmrolle (82) und eine bewegliche Klemmrolle (83) umfasst, die Klemmbasis (81) in der zweiten Richtung verschiebbar mit der Montagebasis (10) verbunden ist, die feste Klemmrolle (82) fest auf der Klemmbasis (81) angeordnet ist und die bewegliche Klemmrolle (83) beweglich mit der Klemmbasis (81) verbunden ist, um mit der festen Klemmrolle (82) zusammenzuwirken und so das Werkstück (200) festzuklemmen.

2. Die Zuführvorrichtung (100) nach Anspruch 1, wobei die Zuführvorrichtung (100) ferner einen ersten Aktuator (40) umfasst, der Schneidwerkzeughalter (21) mit einem ersten Antriebsende des ersten Aktuators (40) verbunden ist und der erste Aktuator (40) in der Lage ist, den Schneidwerkzeughalter (21) anzutreiben, um sich zusammen mit den auf dem Schneidwerkzeughalter (21) befindlichen Teilen in die zweite Richtung zu bewegen.

3. Die Zuführvorrichtung (100) nach Anspruch 1, wobei eine der Antriebsbaugruppe (28) zugewandte Seite des Führungsmechanismus (50) mit einer Führungsnut (51) versehen ist und die Führungsnut (51) einen ersten geraden Nutabschnitt (511), einen bogenförmigen Nutabschnitt (512) und einen zweiten geraden Nutabschnitt (513) aufweist, die nacheinander miteinander in Verbindung stehen; und
der erste gerade Nutabschnitt (511) und der zweite gerade Nutabschnitt (513) beide in die zweite Richtung verlaufen, der bogenförmige Nutabschnitt (512) sich in die erste Richtung zu einer Seite des stationären Schneidwerkzeugs (22) abbiegt und ein erstes Ende der Antriebsbaugruppe (28) verschiebbar in der Führungsnut (51) angeordnet ist,
wobei die Zuführvorrichtung (100) ferner einen zweiten Aktuator umfasst, der Führungsmechanismus (50) mit einem zweiten Antriebsende des zweiten Aktuators verbunden ist und der zweite Aktuator in der Lage ist, den Führungsmechanismus (50) anzutreiben, um ihn von der Antriebsbaugruppe (28) weg oder in ihre Nähe zu bewegen, um einen Abstand zwischen dem Führungsmechanismus (50) und der Antriebsbaugruppe (28) einzustellen.

4. Die Zuführvorrichtung (100) nach Anspruch 1, wobei das Montagestück (231) ein Führungselement (2311) und ein Verbindungselement (2312) umfasst und das Führungselement (2311) in der ersten Richtung verschiebbar auf dem Schneidwerkzeughalter (21) angeordnet ist; und
in der ersten Richtung das bewegliche Schneidwerkzeug (232) und das Verbindungselement (2312) jeweils mit zwei Enden des Führungselements (2311) verbunden sind und die Antriebsbaugruppe (28) ist mit einem Teil des Verbindungselements (2312) verbunden ist, der der Mittellinie (L) entspricht.

5. Die Zuführvorrichtung (100) nach Anspruch 4, wobei das Führungselement (2311) mindestens zwei Gruppen von Führungsstangen (23111) umfasst, wobei jede Gruppe der Führungsstangen (23111) mindestens eine Führungsstange (23111) umfasst und eine Erstreckungsrichtung jeder Führungsstange (23111) parallel zur ersten Richtung ist; und
die beiden Gruppen von Führungsstangen (23111) symmetrisch auf zwei Seiten der Mittellinie (L) angeordnet sind und zwei Enden jeder Führungsstange (23111) jeweils mit dem beweglichen Schneidwerkzeug (232) und dem Verbindungselement (2312) verbunden sind.

6. Die Zuführvorrichtung (100) nach Anspruch 5, wobei Führungshülsen (25) im Schneidwerkzeughalter (21) angeordnet sind und jede Führungsstange (23111) in der entsprechenden Führungshülse (25) aufgenommen ist und/oder
der Schneidmechanismus (20) ferner erste elastische Teile (26) umfasst und die ersten elastischen Teile (26) zwischen den Führungshülsen (25) und dem Verbindungselement (2312) angeordnet sind.

7. Die Zuführvorrichtung (100) nach Anspruch 4, wobei das Montagestück (231) ferner eine Montageplatte (2313) umfasst, die Montageplatte (2313) mit dem Führungselement (2311) verbunden ist und das bewegliche Schneidwerkzeug (232) auf der Montageplatte (2313) montiert ist.

8. Die Zuführvorrichtung (100) nach Anspruch 7, wobei der Schneidmechanismus (20) ferner ein Druckstück (27) umfasst und das Druckstück (27) in der ersten Richtung beweglich auf der Montageplatte (2313) angeordnet ist, um das Werkstück (200) auf das stationäre Schneidwerkzeug (22) zu drücken, bevor das bewegliche Schneidwerkzeug (232) und das stationäre Schneidwerkzeug (22) zusammenwirken, um das Werkstück (200) zu schneiden.

9. Die Zuführvorrichtung (100) nach Anspruch 1, wobei die Antriebsbaugruppe (28) eine Antriebsplatte (282), ein Gegenstück (281) und einen Verbindungsblock (283) umfasst, wobei das Gegenstück (281) mit der Antriebsplatte (282) verbunden und auf den Führungsmechanismus (50) abgestimmt ist und der Verbindungsblock (283) mit der Antriebsplatte (282) und dem Montagestück (231) verbunden ist.

10. Die Zuführvorrichtung (100) nach Anspruch 9, wobei der Verbindungsblock (283) ein erstes Verbindungsteil (2831) und ein zweites Verbindungsteil (2832) umfasst, wobei das erste Verbindungsteil (2831) mit dem Montagestück (231) oder der Antriebsplatte (282) verbunden ist und das zweite Verbindungsteil (2832) mit dem anderen Montagestück (231) oder der Antriebsplatte (282) verbunden ist; und
das erste Verbindungsteil (2831) mit einem darin befindlichen Passloch versehen ist, das zweite Verbindungsteil (2832) sich in einer Richtung parallel zur zweiten Richtung erstreckt und das zweite Verbindungsteil (2832) das Passloch durchdringt.

11. Die Zuführvorrichtung (100) nach Anspruch 10, wobei das Passloch ein taillenförmiges Loch ist, das taillenförmige Loch sich in Längsrichtung in einer Richtung parallel zu einer dritten Richtung erstreckt, zwischen dem zweiten Verbindungsteil (2832) und dem Passloch in der dritten Richtung ein Bewegungsspalt besteht und die erste Richtung, die zweite Richtung und die dritte Richtung einander schneiden.
Vorzugsweise besteht das zweite Verbindungsteil (2832) aus einem Körper (2833) und einer Hülse (2834), die den Körper (2833) umschließt, und sowohl der Körper (2833) als auch die Hülse (2834) durchdringen das Passloch.

12. Die Zuführvorrichtung (100) nach Anspruch 9, wobei die Antriebsplatte (282) eine L-förmige Struktur aufweist, das Gegenstück (281) mit einer kurzen Seite der L-förmigen Struktur verbunden ist und der Verbindungsblock (283) mit einer Außenseite einer langen Seite der L-förmigen Struktur verbunden ist.

13. Die Zuführvorrichtung (100) nach Anspruch 1, wobei entweder die Antriebsbaugruppe (28) oder der Schneidwerkzeughalter (21) mit ersten Gleitschienen (60) versehen ist, die parallel zur ersten Richtung verlaufen, während die jeweils andere Komponente mit ersten Gleitstücken (70) versehen ist, wobei die ersten Gleitstücke (70) gleitend mit den ersten Gleitschienen (60) verbunden sind, und/oder
der Schneidmechanismus (20) ferner ein zweites elastisches Element (24) umfasst, das zweite elastische Element (24) zwischen dem Schneidwerkzeughalter (21) und dem stationären Schneidwerkzeug (22) angeordnet ist.

## Revendications

1. Dispositif d'alimentation (100), comprenant :
une base de montage (10) ;
un mécanisme de coupe (20) monté sur la base de montage (10) ; et
un mécanisme de guidage (50) ;
dans lequel le mécanisme de coupe (20) comprend :
un support de lame (21) ;
une lame fixe (22) disposée de manière fixe sur le support de lame (21) ;
un ensemble lame mobile (23) comprenant une pièce de montage (231) et une lame mobile (232), la pièce de montage (231) étant disposée de manière coulissante sur le support de lame (21) dans une première direction, la lame mobile (232) étant montée sur la pièce de montage (231), et la pièce de montage (231) ayant une un axe médian (L) parallèle à la première direction ; et
un ensemble d'entraînement (28) comprenant une première extrémité et une deuxième extrémité, la première extrémité étant associée au mécanisme de guidage (50), et la deuxième extrémité étant reliée à une partie de la pièce de montage (231) correspondant à l'axe médian (L) ;
dans lequel lorsque le support de lame (21) entraîne des pièces situées sur le support de lame (21) à se déplacer dans une deuxième direction, le mécanisme de guidage (50) peut entraîner l'ensemble d'entraînement (28) pour appliquer une force motrice à la pièce de montage (231) dans la première direction, de sorte que la pièce de montage (231) entraîne la lame mobile (232) à se rapprocher de la lame fixe (22) de manière à couper une pièce (200) à une position prédéfinie, et la première direction coupe la deuxième ;
le dispositif d'alimentation (100) est utilisé pour l'alimentation et la découpe d'un morceau de piquet ; le dispositif d'alimentation (100) étant **caractérisé en ce que** le dispositif d'alimentation (100) comprend en outre un mécanisme de serrage (80) pour serrer la pièce (200), le mécanisme de serrage (80) est relié de manière coulissante à la base de montage (10) dans la deuxième direction, et le mécanisme de serrage (80) et le mécanisme de coupe (20) sont disposés séquentiellement dans la deuxième direction ;
et dans la deuxième direction, le mécanisme de serrage (80) et le mécanisme de coupe (20) sont capables de glisser de manière synchrone par rapport à la base de montage (10),
dans lequel de préférence, le mécanisme de serrage (80) comprend une base de serrage (81), un rouleau de serrage fixe (82) et un rouleau de serrage mobile (83), la base de serrage (81) est reliée de manière coulissante à la base de montage (10) dans la deuxième direction, le rouleau de serrage fixe (82) est disposé de manière fixe sur la base de serrage (81), et le rouleau de serrage mobile (83) est relié de manière mobile à la base de serrage (81) pour coopérer avec le rouleau de serrage fixe (82) afin de serrer la pièce (200).

2. Dispositif d'alimentation (100) selon la revendication 1, dans lequel le dispositif d'alimentation (100) comprend en outre un premier actionneur (40), le support de lame (21) est relié à une première extrémité motrice du premier actionneur (40), et le premier actionneur (40) est capable d'entraîner le support de lame (21) à se déplacer dans la deuxième direction avec des pièces situées sur le support de lame (21).

3. Dispositif d'alimentation (100) selon la revendication 1, dans lequel un côté du mécanisme de guidage (50) faisant face à l'ensemble d'entraînement (28) est pourvu d'une rainure de guidage (51), et la rainure de guidage (51) est pourvue d'une première section de rainure droite (511), d'une section de rainure incurvée (512) et d'une deuxième section de rainure droite (513) communiquant entre elles en séquence ; et
la première section de rainure droite (511) et la deuxième section de rainure droite (513) s'étendent toutes deux dans la deuxième direction, la section de rainure incurvée (512) est incurvée dans la première direction d'un côté de la lame fixe (22), et une première extrémité de l'ensemble d'entraînement (28) est disposée de manière coulissante dans la rainure de guidage (51), dans laquelle le dispositif d'alimentation (100) comprend en outre un deuxième actionneur, le mécanisme de guidage (50) est relié à une deuxième extrémité d'entraînement du deuxième actionneur, et le deuxième actionneur est capable d'entraîner le mécanisme de guidage (50) pour s'éloigner de l'ensemble d'entraînement (28) ou se rapprocher de celui-ci afin d'ajuster une distance entre le mécanisme de guidage (50) et l'ensemble d'entraînement (28).

4. Dispositif d'alimentation (100) selon la revendication 1, dans lequel la pièce de montage (231) comprend un élément de guidage (2311) et un élément de liaison (2312), et l'élément de guidage (2311) est disposé de manière coulissante sur le support de lame (21) dans la première direction ; et
dans la première direction, la lame mobile (232) et l'élément de liaison (2312) sont respectivement reliés à deux extrémités de l'élément de guidage (2311), et l'ensemble d'entraînement (28) est relié à une partie de l'élément de liaison (2312) correspondant à l'axe médian (L).

5. Dispositif d'alimentation (100) selon la revendication 4, dans lequel l'élément de guidage (2311) comprend au moins deux groupes de tiges de guidage (23111), chaque groupe de tiges de guidage (23111) comprend au moins une tige de guidage (23111), et une direction d'extension de chacune desdites tiges de guidage (23111) est parallèle à la première direction ; et
les deux groupes de tiges de guidage (23111) sont disposés symétriquement sur les deux côtés de l'axe médian (L), et les deux extrémités de chacune desdites tiges de guidage (23111) sont respectivement reliées à la lame mobile (232) et à l'élément de liaison (2312).

6. Dispositif d'alimentation (100) selon la revendication 5, dans lequel des manchons de guidage (25) sont disposés dans le support de lame (21), et chaque tige de guidage (23111) est manchonnée à l'intérieur du manchon de guidage (25) correspondant, et/ou
le mécanisme de coupe (20) comprend en outre les premières pièces élastiques (26), et les premières pièces élastiques (26) sont disposées entre les manchons de guidage (25) et l'élément de liaison (2312).

7. Dispositif d'alimentation (100) selon la revendication 4, dans lequel la pièce de montage (231) comprend en outre une plaque de montage (2313), la plaque de montage (2313) est reliée à l'élément de guidage (2311) et la lame mobile (232) est montée sur la plaque de montage (2313).

8. Dispositif d'alimentation (100) selon la revendication 7, dans lequel le mécanisme de coupe (20) comprend en outre une pièce de pression (27), et la pièce de pression (27) est disposée de manière mobile sur la plaque de montage (2313) dans la première direction pour presser la pièce (200) sur la lame fixe (22) avant que la lame mobile (232) et la lame fixe (22) ne coopèrent pour couper la pièce (200).

9. Dispositif d'alimentation (100) selon la revendication 1, dans lequel l'ensemble d'entraînement (28) comprend une plaque d'entraînement (282), une pièce d'accouplement (281) et un bloc de connexion (283), la pièce d'accouplement (281) est reliée à la plaque d'entraînement (282) et adaptée au mécanisme de guidage (50), et le bloc de connexion (283) est relié à la plaque d'entraînement (282) et à la pièce de montage (231).

10. Dispositif d'alimentation (100) selon la revendication 9, dans lequel le bloc de connexion (283) comprend une première pièce de connexion (2831) et une deuxième pièce de connexion (2832), la première pièce de connexion (2831) est reliée à l'une des pièces de montage (231) et à la plaque d'entraînement (282), et la deuxième pièce de connexion (2832) est reliée à l'autre de la pièce de montage (231) et de la plaque d'entraînement (282) ; et
la première pièce de connexion (2831) est pourvue d'un trou d'accouplement, la deuxième pièce de connexion (2832) s'étend dans une direction parallèle à la deuxième direction et la deuxième pièce de connexion (2832) pénètre à travers le trou d'accouplement.

11. Dispositif d'alimentation (100) selon la revendication 10, dans lequel le trou d'accouplement est un trou en forme de taille, le trou en forme de taille s'étend longitudinalement dans une direction parallèle à une troisième direction, il existe un espace mobile entre la deuxième pièce de connexion (2832) et le trou d'accouplement dans la troisième direction, et la première direction, la deuxième direction et la troisième direction se coupent, de préférence, la deuxième pièce de connexion (2832) comprend un corps (2833) et un manchon (2834) qui gaine le corps (2833), et le corps (2833) et le manchon (2834) pénètrent à travers le trou d'accouplement.

12. Dispositif d'alimentation (100) selon la revendication 9, dans lequel la plaque d'entraînement (282) est d'une structure en forme de L, la pièce d'accouplement (281) est reliée à un côté court de la structure en forme de L, et le bloc de connexion (283) est relié à un côté extérieur d'un côté long de la structure en forme de L.

13. Dispositif d'alimentation (100) selon la revendication 1, dans lequel l'un des ensembles d'entraînement (28) et le support de lame (21) est pourvu de premiers rails coulissants (60) parallèles à la première direction, l'autre est pourvu de premiers curseurs (70), et les premiers curseurs (70) sont reliés de manière coulissante aux premiers rails coulissants (60), et/ou
le mécanisme de coupe (20) comprend en outre une deuxième pièce élastique (24), et la deuxième pièce élastique (24) est prise en sandwich entre le support de lame (21) et la lame fixe (22).
